# EUROPEAN PATENT SPECIFICATION

(11) **EP 4 512 035 B1**
(45) Date of publication and mention of the grant of the patent: **26.08.2026**
(21) Application number: 23792111.9
(22) Date of filing: 14.04.2023
(51) Int. Cl.: H04L 9/00, H04L 9/30, G06F 17/11, G06F 7/50, G06F 7/523, G06F 11/14, G06F 5/01

(54) **APPARATUS FOR BOOTSTRAP PROCESSING HOMOMORPHIC ENCRYPTED MESSAGE AND METHOD THEREOF**
VORRICHTUNG ZUR BOOTSTRAP-VERARBEITUNG HOMOMORPHER VERSCHLÜSSELTER NACHRICHTEN UND VERFAHREN DAFÜR
APPAREIL DE TRAITEMENT D'AMORÇAGE DE MESSAGE CHIFFRÉ HOMOMORPHE ET PROCÉDÉ ASSOCIÉ

(30) Priority: 20.04.2022 KR 20220048850; 13.10.2022 KR 20220131799; 24.10.2022 KR 20220137739; 02.12.2022 KR 20220166511
(43) Date of publication of application: 26.02.2025
(73) Proprietor: CRYPTO LAB INC., Gwanak-gu, Seoul 08826 (KR)
(72) Inventor: CHEON, Jung Hee, Seoul 08826 (KR); BAE, Youngjin, Seoul 08826 (KR); KIM, Jaehyung, Seoul 06902 (KR)
(74) Representative: Patentwerk B.V.
(86) International application number: PCT/KR2023/005107
(87) International publication number: WO 2023/204534

(56) References cited:
- EP-A1- 3 975 471
- CN-B- 106 452 723
- KR-B1- 102 019 159
- US-A1- 2021 297 233
- US-B2- 11 115 182

## Description

### Technical Field

The present disclosure relates to an apparatus and method for efficiently performing a method of bootstrapping a homomorphic encrypted message.

### Background Art

As communication technology develops and electronic devices spread, efforts are continuously made to maintain communication security between the electronic devices. Accordingly, encryption/decryption technology is used in most communication environments.

When messages encrypted by the encryption technology are delivered to the other party, the other party needs to perform decryption in order to use the messages. In this case, the other party wastes resources and time in the process of decrypting the encrypted data. In addition, when a third party is performing hacking while the other party temporarily decrypts messages for calculation, there is a problem in that the messages may be easily leaked to the third party.

In order to solve this problem, a homomorphic encryption method is being studied. According to the homomorphic encryption, even if calculation is performed on encrypted messages themselves without decrypting the encrypted information, it is possible to obtain the same result as the encrypted value after performing calculation on a plain text. Accordingly, various calculations may be performed without decrypting the encrypted messages.

However, when homomorphic calculation such as homomorphic multiplication are performed, a plain text space within the homomorphic encrypted message decreases, and when the plain text space is reduced below a certain size, the calculation is no longer possible. In this respect, recently, a bootstrapping method capable of extending the plain text space of the homomorphic encrypted message has been used.

However, since the existing bootstrapping method has a problem in that calculation accuracy may change due to amplification of an error during reflection of a scaling factor, a bootstrapping method with high calculation accuracy is required. Patent document US 11115182 (Cryptolab, 7 September 2021) constitutes relevant prior-art art.

### Disclosure of Invention

### Technical Problem

Therefore, an object of the present disclosure is to provide an apparatus and method for efficiently performing a bootstrapping calculation on homomorphic encrypted messages.

### Solution to Problem

According to an aspect of the present disclosure, a method of processing an encrypted message includes: performing calculation on a homomorphic encrypted message on an approximate message including an error; and when a proportion of the approximate message in a calculation result encrypted message acquired by the calculation exceeds a threshold value, extending a plain text space of the calculation result encrypted message, in which the extending of the plain text space includes: generating a first intermediate encrypted message by applying a preset bootstrapping calculation to the calculation result encrypted message; generating a second intermediate encrypted message by applying the preset bootstrapping calculation to a subtraction calculation result between the calculation result encrypted message and the first intermediate encrypted message; and generating a homomorphic encrypted message having an extended plain text space by performing a subtraction calculation of the second intermediate encrypted message on the first intermediate encrypted message.

In the generating of the first intermediate encrypted message, a scaling factor may be reflected to have a preset range of the calculation result encrypted message, the preset bootstrapping calculation may be applied to the calculation result encrypted message in which the scaling factor is reflected, and the scaling factor may be reflected in a result to which the preset bootstrapping calculation is applied to generate the first intermediate encrypted message.

The preset range may be [-1, 1].

The preset range may be [-2^{(k-1)n}, 2^{(k-1)n}], where k may be the number of repetitions of the extending of the plain text space, and n may be precision.

The preset bootstrapping calculation may include: extending a modulus of the homomorphic encrypted message; linearly transforming the homomorphic encrypted message having the extended modulus into a polynomial form; performing an approximate modulus calculation on the homomorphic encrypted message transformed into the polynomial form using a polynomial equation set so that input values within the preset range approximate an integer point; and linearly transforming a result of calculating the approximate modulus into a form of the homomorphic encrypted message.

The preset bootstrapping calculation may include: linearly transforming the homomorphic encrypted message into a polynomial form; extending the modulus of the homomorphic encrypted message linearly transformed into the polynomial form; performing an approximate modulus calculation on a result of extending the modulus; and linearly transforming the result of calculating the approximate modulus into a form of the homomorphic encrypted message.

According to another aspect of the present disclosure, an arithmetic unit includes: a memory configured to store a homomorphic encrypted message for an approximate message including an error; and a processor configured to perform calculation on the homomorphic encrypted message, in which the processor generates a first intermediate encrypted message by applying a preset bootstrapping calculation to the calculation result encrypted message, generates a second intermediate encrypted message by applying the preset bootstrapping calculation to a subtraction calculation result between the calculation result encrypted message and the first intermediate encrypted message, and generates a homomorphic encrypted message having an extended plain text space by performing a subtraction calculation of the second intermediate encrypted message on the first intermediate encrypted message.

The processor may reflect a scaling factor to have a preset range of the calculation result encrypted message, apply the preset bootstrapping calculation to the calculation result encrypted message in which the scaling factor is reflected, and reflect the scaling factor in a result to which the preset bootstrapping calculation is applied to generate the first intermediate encrypted message.

The preset range may be [-1, 1].

The preset range may be [-2^{(k-1)n}, 2^{(k-1)n}], where k may be the number of repetitions of the extending of the plain text space, and n may be precision.

The processor may extend a modulus of the homomorphic encrypted message, linearly transform the homomorphic encrypted message having the extended modulus into a polynomial form, perform an approximate modulus calculation on the homomorphic encrypted message transformed into the polynomial form using a polynomial equation set so that input values within the preset range approximate an integer point, and linearly transform a result of calculating the approximate modulus into a form of the homomorphic encrypted message to perform the preset bootstrapping calculation.

The processor may linearly transform the homomorphic encrypted message into a polynomial form, extend the modulus of the homomorphic encrypted message linearly transformed into the polynomial form, perform an approximate modulus calculation on a result of extending the modulus, and linearly transform the result of calculating the approximate modulus into a form of the homomorphic encrypted message to perform the preset bootstrapping calculation to perform the preset bootstrapping calculation.

### Advantageous Effects of Invention

According to various embodiments of the present disclosure as described above, it is possible to perform a bootstrapping operation while maintaining higher accuracy than before.

### Brief Description of Drawings

FIG. 1 is a diagram for describing a structure of a network system according to an embodiment of the present disclosure.
FIG. 2 is a block diagram illustrating a configuration of a arithmetic unit according to an embodiment of the present disclosure.
FIG. 3 is a diagram for describing a bootstrapping operation.
FIG. 4 is a diagram for describing the bootstrapping operation of the present disclosure.
FIG. 5 is a flowchart for describing a method of processing a homomorphic encrypted message according to the present disclosure.
FIG. 6 is a flowchart for describing the bootstrapping operation of the present disclosure.
FIG. 7 is a flowchart for describing an operation of extending a plain text space of the present disclosure.
FIG. 8 is a diagram illustrating an algorithm of a bootstrapping operation according to a first embodiment of the present disclosure.
FIG. 9 is a diagram illustrating an algorithm of a bootstrapping operation according to a second embodiment of the present disclosure.
FIGS. 10 and 11 are diagrams for describing a change in precision due to the bootstrapping operation.

### Mode for the Invention

Hereinafter, the present disclosure will be described in detail with reference to the accompanying drawings. Encryption/decryption may be applied to an information (data) transmission process performed in the present disclosure, if necessary, and all expressions describing the information (data) transmission process in the present disclosure and claims should be interpreted as including cases of encryption/decryption even if not separately stated. In the present disclosure, expressions such as "transmission (delivery) from A to B" or "A receiving from B" include transmission (delivery) or reception with another medium included therebetween, and does not necessarily express only what is directly transmitted (delivered) or received from A to B.

In the description of the present disclosure, the order of each step should be understood as non-limiting unless the preceding step needs to be logically and temporally performed necessarily before the following step. In other words, except for the above exceptional cases, even if the process described as the following step is performed before the process described as the preceding step, the nature of the disclosure is not affected, and the scope should also be defined regardless of the order of the steps. In this specification, "A or B" is defined to mean not only selectively indicating either one of A and B, but also including both A and B. In addition, in the present disclosure, the term "include" has a meaning encompassing further including other components in addition to elements listed as included.

In this disclosure, only essential components necessary for the description of the present disclosure are described, and components unrelated to the essence of the present disclosure are not mentioned. In addition, it should not be interpreted as an exclusive meaning that includes only the mentioned components, but should be interpreted as a non-exclusive meaning that may include other components.

In addition, in the present disclosure, "value" is defined as a concept including a vector as well as a scalar value. In the present disclosure, the expressions such as "compute," and "calculate" may be replaced by an expression that produces a result of the corresponding computation or calculation. In addition, unless otherwise stated, calculation of an encrypted message to be described below means a homomorphic calculation. For example, an addition of a homomorphic encrypted message means a homomorphic addition of two homomorphic encrypted messages.

Mathematical calculations and computations of each step of the present disclosure to be described below may be implemented as computer calculations by the known coding method and/or coding designed to suit the present disclosure.

Specific equations to be described below are illustratively described among possible alternatives, and the scope of the present disclosure should not be construed as being limited to equations mentioned in the present disclosure.

For convenience of description, in the present disclosure, a notation is defined as follows.
a ← D: select element (a) according to distribution (D)
s1, s2 ∈ R: S1, S2: Each of S1 and S2 is an element belonging to set R
mod(q): Modular calculation with element q
$⋅$ : Round-off internal value

Hereinafter, various embodiments of the present disclosure will be described in detail with reference to the accompanying drawings.

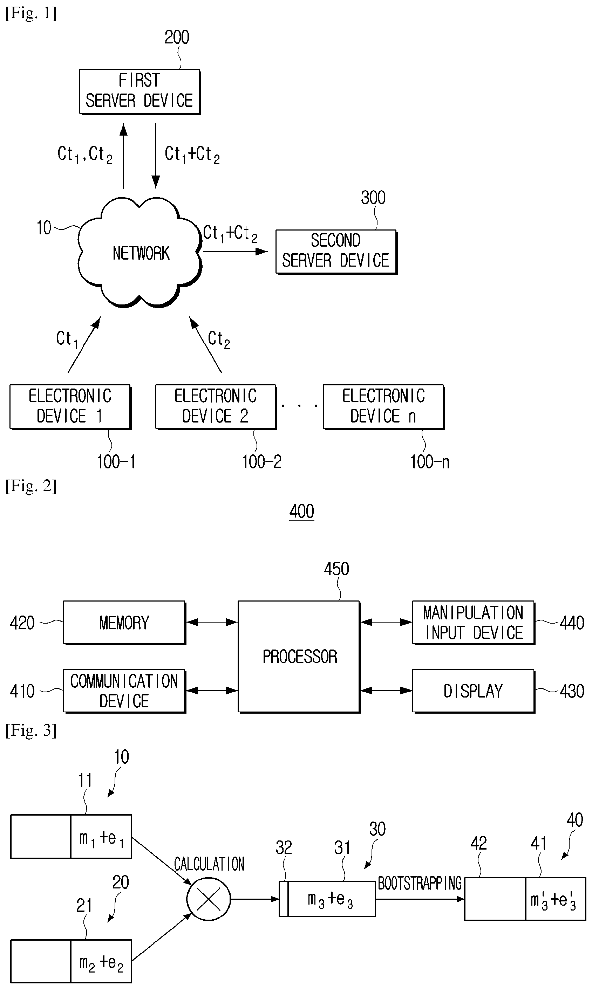

FIG. 1 is a diagram for describing a structure of a network system according to an embodiment of the present disclosure.

Referring to FIG. 1, a network system may include a plurality of electronic devices 100-1 to 100-n, a first server device 200, and a second server device 300, each of which may be connected to each other through a network 10.

The network 10 may be implemented in various types of wired and wireless communication networks, broadcast communication networks, optical communication networks, cloud networks, etc., and each device may be connected in a manner such as Wi-Fi, Bluetooth, near field communication (NFC), etc., without a separate medium.

Although FIG. 1 illustrates a plurality of electronic devices 100-1 to 100-n, a plurality of electronic devices are not necessarily used, and one device may be used. For example, the electronic devices 100-1 to 100-n may be implemented as various types of devices such as smart phones, tablets, game players, PCs, laptop PCs, home servers, and kiosks. In addition, the electronic devices 100-1 to 100-n may be implemented in the form of home appliances to which an IoT function is applied.

Users may input various types of information through the electronic devices 100-1 to 100-n they use. The input information may be stored in the electronic devices 100-1 to 100-n themselves, but may also be transmitted to and stored in an external device for storage capacity and security reasons. In FIG. 1, the first server device 200 may serve to store such information, and the second server device 300 may serve to use some or all of the information stored in the first server device 200.

Each of the electronic devices 100-1 to 100-n may homomorphically encrypt the input information and transmit the homomorphic encrypted messages to the first server device 200.

Each of the electronic devices 100-1 to 100-n may include encryption noise, i.e., an error, generated in the process of performing homomorphic encryption in an encrypted message. Specifically, the homomorphic encrypted messages generated by each of the electronic devices 100-1 to 100-n may be generated in a form in which a result value including a message and an error value is restored when decrypted later using a secret key.

For example, when the homomorphic encrypted messages generated by the electronic devices 100-1 to 100-n are decrypted using a secret key, the homomorphic encrypted messages may be generated in a form that satisfies the following natures.$Dec \left(ct, sk\right) = \left〈ct, sk\right〉 = M + e \left(mod q\right)$

Here, < , > denotes a dot product calculation (usual inner product), ct denotes an encrypted message, sk denotes a secret key, M denotes a plain text message, e denotes an encryption error value, and mod q denotes a modulus of an encrypted message. q should be selected to be greater larger than a result value M obtained by multiplying a scaling factor △ by a message. When an absolute value of the error value e is sufficiently small compared to M, a decryption value M+e of the encrypted message is a value that may replace the original message with the same precision in significant figure calculation. Among the decoded data, an error may be placed on the least significant bit (LSB) side, and M may be placed on the next least significant bit side.

When a size of the message is too small or too large, the size may be adjusted using a scaling factor. When the scaling factor is used, not only an integer type message but also a real number type message may be encrypted, and thus, the usability of the message may be greatly increased. In addition, by adjusting the size of the message using the scaling factor, a size of an area where messages exist in the encrypted message after the calculation is made, that is, a size of an effective area may also be adjusted.

Depending on the embodiment, a modulus q of the encrypted message may be set and used in various forms. For example, the modulus of the encrypted message may be set in the form of an exponential power q=△^{L} of the scaling factor △. When △ is 2, △ may be set to a value such as q=2¹⁰.

In addition, the homomorphic encrypted message according to the present disclosure is described on the assumption that a fixed point is used, but may be applied even when a floating point is used.

The first server device 200 may store the received homomorphic encrypted message in an encrypted message state without decrypting received homomorphic encrypted message.

The second server device 300 may request a specific processing result for the homomorphic encrypted message from the first server device 200. The first server device 200 may perform a specific calculation according to the request of the second server device 300 and then transmit the result to the second server device 300.

For example, when encrypted messages ct1 and ct2 transmitted by the two electronic devices 100-1 and 100-2 are stored in the first server device 200, the second server device 300 may request, from the first server device 200, a value obtained by summing information provided from the two electronic devices 100-1 and 100-2. The first server device 200 may perform calculation for summing the two encrypted messages according to the request, and then transmit the result value ct1 + ct2 to the second server device 300.

Due to the nature of the homomorphic encrypted message, the first server device 200 may perform the calculation without the decryption, and the result value is also in the form of an encrypted message. In the present disclosure, the result value obtained by calculation is referred to as a calculation result encrypted message.

The first server device 200 may transmit the calculation result encrypted message to the second server device 300. The second server device 300 may decrypt the received calculation result encrypted message and acquire calculation result values of data included in each homomorphic encrypted message.

The first server device 200 may perform the calculation several times according to a user request. In this case, proportions of approximate messages within the calculation result encrypted messages obtained for each calculation is different. The first server device 200 may perform a bootstrapping operation when the proportions of the approximate messages exceed a threshold value. In this way, the first server device 200 may be referred to as an arithmetic unit in that it may perform the calculation operation.

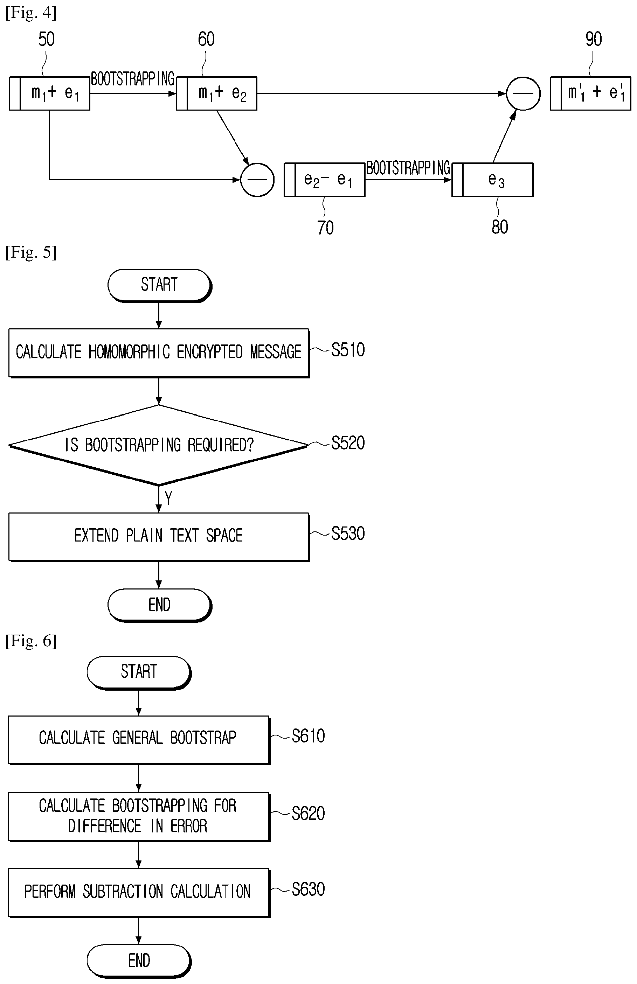

Specifically, when q is less than M in Equation 1 described above, since M+e (mod q) has a different value from M+e, the decryption becomes impossible. Therefore, the q value should always be kept greater than M. However, as the calculation progresses, the q value gradually decreases. Therefore, an operation of changing the q value so that the q value is always greater than M is required, and this operation is called the bootstrapping operation. As such a bootstrapping operation is performed, the encrypted message may be calculated again. A specific operation related to the bootstrapping will be described later with reference to FIGS. 3 and 4.

Meanwhile, FIG. 1 illustrates a case where the first electronic device and the second electronic device perform the encryption and the second server device performs the decryption, but is not necessarily limited thereto.

FIG. 2 is a block diagram illustrating a configuration of an arithmetic unit according to an embodiment of the present disclosure.

Specifically, in the system of FIG. 1, a device that performs homomorphic encryption, such as the first electronic device and the second electronic device, a device that calculates the homomorphic encrypted message, such as the first server device, and a device that decrypts the homomorphic encrypted message, such as a second server device, may be referred to as an arithmetic unit. The arithmetic unit may be various devices such as a personal computer (PC), a laptop computer, a smart phone, a tablet, and a server.

Referring to FIG. 2, an arithmetic unit 400 may include a communication device 410, a memory 420, a display 430, a manipulation input device 440, and a processor 450.

The communication device 410 is formed to connect the arithmetic unit 400 to an external device (not illustrated), and may be connected to the external device through a local area network (LAN) and the Internet network or be connected to the terminal apparatus through a USB port or a wireless communication (for example, wireless fidelity (WiFi), 802.11a/b/g/n, near field communication (NFC), or Bluetooth) port. Such a communication device 410 may also be referred to as a transceiver.

The communication device 410 may receive a public key from the external device and transmit the public key generated by the arithmetic unit 400 itself to the external device.

Also, the communication device 410 may receive a message from the external device and transmit the generated homomorphic encrypted message to the external device.

Also, the communication device 410 may receive various parameters required for generating an encrypted message from an external device. Meanwhile, upon implementation, various parameters may be directly received from a user through a manipulation input device 440 to be described later.

In addition, the communication device 410 may receive a request for calculation of the homomorphic encrypted message from an external device and transmit the calculated result to the external device.

The memory 420 is a component for storing O/S for driving the arithmetic unit 400, various software, data, and the like. The memory 420 may be implemented in various forms such as RAM, ROM, flash memory, HDD, external memory, and memory card, but is not limited to any one.

The memory 420 stores the message to be encrypted. Here, the message may be various types of credit information, personal information, and the like cited by a user, and may also be information related to location information used in the arithmetic unit 400 and a use history such as Internet usage time information.

In addition, the memory 420 may store a public key, and when the arithmetic unit 400 is a device that directly generates the public key, the memory 420 may store not only a secret key, but also various parameters necessary for generating the public key and the secret key.

Also, the memory 420 may store the homomorphic encrypted message generated in the process described below. Also, the memory 420 may store the homomorphic encrypted message transmitted from the external device. Also, the memory 420 may store the calculation result encrypted message that is the result of the calculation process described later.

The display 430 displays a user interface window for selecting a function supported by the arithmetic unit 400. Specifically, the display 430 may display a user interface window for selecting various functions provided by the arithmetic unit 400. The display 430 may be a monitor such as a liquid crystal display (LCD) and organic light emitting diodes (OLED), and may be implemented as a touch screen capable of simultaneously performing the functions of the manipulation input device 440 to be described later.

The display 430 may display a message requesting input of parameters necessary for generating a secret key and a public key. Also, the display 430 may display a message in which an encryption target selects a message. Meanwhile, the encryption target may be directly selected by a user or may be automatically selected in implementation. That is, personal information or the like that requires encryption may be automatically set even if a user does not directly select a message.

The manipulation input device 440 may receive a function selection of the arithmetic unit 400 and a control command for the function from the user. Specifically, the manipulation input device 440 may receive parameters necessary for generating a secret key and a public key from the user. Also, the manipulation input device 440 may receive a message to be encrypted from a user.

The processor 450 controls each component in the arithmetic unit 400. The processor 450 may be composed of a single device such as a central processing unit (CPU) and an application-specific integrated circuit (ASIC), or may be composed of a plurality of devices such as a CPU and a graphics processing unit (GPU).

When a message to be transmitted is input, the processor 450 stores the message in the memory 420. The processor 450 uses various setting values and programs stored in the memory 420 to homomorphically encrypt the message. In this case, a public key may be used.

The processor 450 may generate and use a public key required to perform encryption by itself, or may receive and use the public key from an external device. For example, the second server device 300 that performs the decryption may distribute a public key to other devices.

When generating a key by itself, the processor 450 may generate a public key using a Ring-LWE technique. Specifically, the processor 450 may first set various parameters and rings and store the parameters and rings in the memory 420. Examples of the parameters may include lengths of plain text message bits, sizes of public and secret keys, and the like.

The ring may be represented by the following equation.$R = \frac{{Z}_{q} \left[X\right]}{f \left(x\right)}$

Here, R denotes a ring, Z_{q} denotes a coefficient, and f(x) denotes an n-th polynomial.

The ring is a set of polynomials having preset coefficients, and means a set in which addition and multiplication are defined between elements and which is closed for addition and multiplication. Such a ring may be referred to as an annulus.

For example, the ring means a set of n-th polynomials having a coefficient Z_{q}. Specifically, when n is Φ (N), it means an N-th cyclotomic polynomial. f(x) denotes ideal of Z_{q}[x] generated by the f(x). The Euler totient function Φ(N) means the number of natural numbers that is coprime to N and smaller than N. When Φ_{N}(x) is defined as an N-th cyclotomic polynomial, the ring may also be represented by Equation 3 as follows.$R = \frac{{Z}_{q} \left[X\right]}{{Φ}_{N} \left(x\right)}$

A secret key sk may be represented as follows.

Meanwhile, the ring of Equation 3 described above has a complex number in the plain text space. Meanwhile, in order to improve the calculation speed of the homomorphic encrypted message, only a set in which the plain text space is a real number in the above-described set of rings may be used.

When such a ring is established, the processor 450 may calculate the secret key sk from the ring.$sk ← \left(1,s\left(x\right)\right) , s \left(x\right) ∈ R$

Here, s(x) means a polynomial generated randomly with small coefficients.

The processor 450 calculates a first random polynomial a(x) from the ring. The first random polynomial may be represented as follows.$a \left(x\right) ← R$

Also, the processor 450 may calculate an error. Specifically, the processor 450 may extract an error from a discrete Gaussian distribution or a distribution statistically close to the discrete Gaussian distribution. This error may be represented as follows.$e \left(x\right) ← {{D}^{n}}_{αq}$

When an error is calculated, the processor 450 may calculate a second random polynomial by modularly calculating an error in the first random polynomial and the secret key. The second random polynomial may be represented as follows.$b \left(x\right) = - a \left(x\right) s \left(x\right) + e \left(x\right) \left(mod q\right)$

Finally, a public key pk is set as follows in a form including the first random polynomial and the second random polynomial.$pk = \left(b\left(x\right), a\left(x\right)\right)$

Since the above-described key generation method is only an example, it is not necessarily limited thereto, and it goes without saying that the public key and the private key may be generated by other methods.

Meanwhile, when a public key is generated, the processor 450 may control the communication device 410 to transmit the public key to other devices.

The processor 450 may generate a homomorphic encrypted message for a message. Specifically, the processor 450 may generate a homomorphic encrypted message by applying the previously generated public key to the message. In this case, the processor 450 may generate the length of the encrypted message to correspond to the size of the scaling factor.

When the homomorphic encrypted message is generated, the processor 450 may control the communication device 410 to store the homomorphic encrypted message in the memory 420 or transmit the homomorphic encrypted message to another device according to a user request or a preset default command.

Meanwhile, according to an embodiment of the present disclosure, packing may be performed. When the packing is used in homomorphic encryption, it becomes possible to encrypt a plurality of messages into one encrypted message. In this case, when the arithmetic unit 400 performs calculations between each encrypted message, since calculations for multiple messages are processed in parallel, the calculation burden is greatly reduced.

Specifically, when a message is composed of a plurality of message vectors, the processor 450 may transform a plurality of message vectors into a polynomial in a form that the plurality of message vectors may be encrypted in parallel, multiply the polynomial by a scaling factor, and perform the homomorphic encryption using a public key. Accordingly, an encrypted message in which a plurality of message vectors are packed may be generated.

Further, when the homomorphic encrypted message needs to be decrypted, the processor 450 may apply a secret key to the homomorphic encrypted message to generate a polynomial-type decrypted message, and decode the polynomial-type decrypted message to generate a message. In this case, the generated message may include an error as mentioned in Equation 1 described above.

The processor 450 may perform calculation on the encrypted message. Specifically, the processor 450 may perform calculation such as addition or multiplication on a homomorphic encrypted message while maintaining an encrypted state. Specifically, the processor 450 may perform first function processing on each of the homomorphic encrypted messages to be used in the calculation, perform calculation such as addition or multiplication between the homomorphic encrypted messages subjected to the first function processing, and perform second function processing, which is an inverse function to the first function, on the calculated homomorphic encrypted message. For the first function processing and the second function processing, a linear transformation technique in a bootstrapping process described later may be used.

Meanwhile, when calculation is completed, the arithmetic unit 400 may detect data in an effective area from calculation result data. Specifically, the arithmetic unit 400 may detect the data in the effective area by performing rounding processing on the calculation result data. The rounding processing means rounding-off a message in an encrypted state, and may also be referred to as rescaling. Specifically, the arithmetic unit 400 removes a noise area by multiplying each component of the encrypted message by △⁻¹ which is the reciprocal of the scaling factor, and rounding-off each component of the encrypted message. The noise area may be determined to correspond to the size of the scaling factor. As a result, it is possible to detect a message in the effective area from which the noise area is excluded. Since the detection is performed in an encrypted state, an additional error occurs, but the size is small enough to be ignored.

In addition, the arithmetic unit 400 may perform a bootstrapping operation on the encrypted message when the proportion of the approximate message in the calculation result encrypted message exceeds a threshold value. In this case, the arithmetic unit 400 may perform a bootstrapping operation of a general method or a bootstrapping operation of a meta bootstrapping method according to the present disclosure. Specifically, the arithmetic unit 400 may determine a bootstrapping method in consideration of the calculation speed or/and precision of the homomorphic encrypted message. For example, when the quick bootstrapping of the arithmetic unit 400 is required, the bootstrapping may be performed in the general method, and when high precision is required or the difference in the value between the homomorphic encrypted messages is predicted to be large, the bootstrapping may be determined to be performed by the meta bootstrapping method.

In the case of using the general bootstrapping method, the arithmetic unit 400 may perform the bootstrapping operation by performing the preset bootstrapping calculation. Specifically, the arithmetic unit 400 may extend a modulus of the homomorphic encrypted message, linearly transform the homomorphic encrypted message having the extended modulus into a polynomial form, perform an approximate modulus calculation on the homomorphic encrypted message transformed into the polynomial form using a polynomial equation set so that input values within the preset range approximate an integer point, and linearly transform a result of calculating the approximate modulus into a form of the homomorphic encrypted message to perform the above-described preset bootstrapping calculation. In this case, the arithmetic unit 400 may change the order of the above-described modulus extension operation and linear transformation operation and perform the modulus extension operation and linear transformation operation.

Meanwhile, when the meta bootstrapping method is used, the arithmetic unit 400 may generate a first intermediate encrypted message by applying a preset bootstrapping calculation to the calculation result encrypted message, generate a second intermediate encrypted message by applying the preset bootstrapping calculation to a subtraction calculation result between the calculation result encrypted message and the first intermediate encrypted message, and generate a homomorphic encrypted message having an extended plain text space by performing a subtraction calculation of the second intermediate encrypted message on the first intermediate encrypted message. The meta bootstrapping method according to the present disclosure will be described in detail with reference to FIG. 3.

As described above, since the arithmetic unit 400 according to the embodiment of the present disclosure performs the bootstrapping operation on the homomorphic encrypted message, more efficient homomorphic calculation is possible. In addition, by using the meta bootstrapping method according to the embodiment of the present disclosure, it is possible to prevent deterioration in precision that may occur in the bootstrapping process.

FIG. 3 is a diagram for describing the bootstrapping operation. Specifically, FIG. 3 illustrates the calculation and bootstrapping process for two homomorphic encrypted messages 10 and 20. The term bootstrapping may be expressed as the bootstrapping, the plain text space expansion, or the like.

Each homomorphic encrypted message 10 and 20 may include approximate message areas 11 and 21, respectively. The approximate message areas 11 and 21 include messages and errors m1+e1 and m2+e2 together.

The arithmetic unit 400 may perform a specific calculation by using two homomorphic encrypted messages 10 and 20 as input values.

The calculation result encrypted message 30 may include an approximate message area 31 including a calculation result m3+e3 between each approximate message. As the calculation result becomes greater than the input value, the approximate message area also increases, so the remaining plain text space 32 decreases. When this calculation is performed several times, the remaining plain text space 32 eventually disappears or becomes smaller than the limit value, so the calculation may not be performed. When it is determined to be in this state, the arithmetic unit 400 may perform the bootstrapping operation.

In the bootstrapped encrypted message 40, it can be seen that the approximate message area 41 is constant and the plain text space 42 is extended.

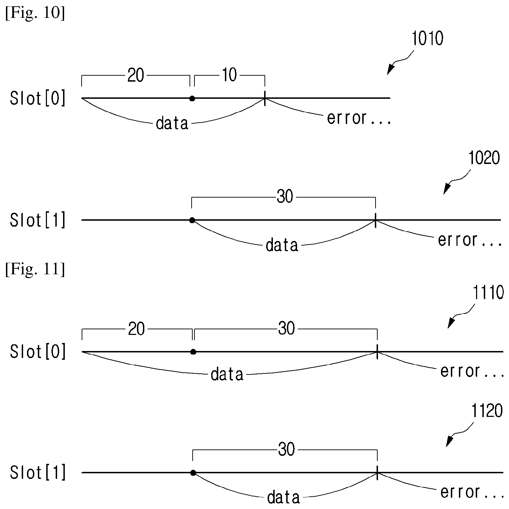

In this way, the bootstrapping method may perform continuous calculation processing for the homomorphic encrypted messages in that it extends the plain text space. However, in the existing bootstrapping method, the loss of precision (or amplification of errors) may occur during the process. This will be described in detail with reference to FIG. 10.

There are a fixed point method and a floating point method as a method of representing figures. The floating point method is advantageous in terms of preserving significant figures, but many homomorphic encrypted messages adopt the fixed point method in order to prevent the possibility of data leakage in an encrypted message.

However, when the fixed point method is used and the range of data to be used is wide, the following problems occur. In the following, for ease of explanation, it is assumed that 30-bit precision is supported for the homomorphic encrypted messages and that two slots (slot[0], slot[1]) contain values of 2²⁰ and 1, respectively.

When the floating point method (or ideal method) satisfies the precision of 30, slot[0] (1010) guarantees 30 digits with 20 digits above the decimal point and 10 digits below the decimal point, and slot [1] (1020) guarantees 30 digits below the decimal point.

However, the 30-bit precision in the fixed-point method means that 30 digits are counted from the highest digit, and that is preserved as a whole. Therefore, slot [0] is guaranteed to have 30 digits with 20 digits above the decimal point and 10 digits below the decimal point like the above-described floating point method. However, slot[1] should have the same number of digits as slot[0], and therefore, has 20 digits above the decimal point and 10 digits below the decimal point. In this way, for slot [1], in the fixed point method, only 10 digits below the decimal point are guaranteed, so the actual precision for the corresponding slot is 10 bits.

Speaking from the point of view of amplification of errors, given data x = {slot[0], slot[1]}, since bootstrapping is performed with bootstrapping (x/2^20)*2^20, it can be said that the error is amplified by 2²⁰. As a result, slot [1] is reduced to 10 digits of precision.

In other words, if it is assumed that a maximum value of an absolute value of data slots that are generally handled is bound to 2^M and a minimum value is bound to 2^N, when the bootstrapping is performed, the precision of the bootstrapping and the precision in the floating point are different as much as (M-N) bits.

Reflecting on this, a general bootstrapping operation will be described. In general bootstrapping, an operation of 1) changing the range of the homomorphic encrypted messages to the range in which the approximation algorithm is applied, an operation of 2) applying the approximation algorithm, and an operation of 3) restoring the range are sequentially performed. For example, when bootstrapping for CT₃ = m₃ + e₃ is performed using an approximation algorithm with an approximate range of [-1, 1], the order (or scaling factor) is reflected (2⁻²²*CT₃ = 2⁻²²*(m₃ + e₃)) for range adjustment, the approximation algorithm is applied (CT₃'= 1/2²²*m₃' + e₄), and an operation reflecting the reciprocal of the order is performed (CT₃' = 2²²(1/2²²*m₃' + e₄) = m3' + 2²²e₄

In the case of performing the general bootstrapping operation in this way, a problem in which an error increases in a scaling process for applying an approximation algorithm occurs.

Accordingly, an object of the present disclosure is to make the bootstrapping result have only an error within an error range allowed by the approximation algorithm in order to solve such a problem in the existing bootstrapping process.

In order to achieve this object, an operation of i) checking an error that is greater than or equal to the error range allowed by the approximation algorithm among errors included in the bootstrapping result, and ii) removing the checked error is required.

Hereinafter, with reference to FIG. 4, one basic method for achieving the above object will be described, but it is possible to variously modify the above method in implementation.

FIG. 4 is a diagram for describing the bootstrapping operation of the present disclosure.

A new bootstrapping operation according to the present disclosure uses an existing bootstrapping operation. It is also possible to modify the existing bootstrapping operation during use or to modify and use the existing bootstrapping operation. First, for ease of description, the general bootstrapping operation used before the present disclosure is referred to as the preset bootstrapping operation, and a new bootstrapping operation according to the present disclosure is referred to as meta bootstrapping. (Hereinafter, ∥*x*∥≤ 2*ⁿ*, n is precision)

Referring to FIG. 4, when the meta bootstrapping is performed, the preset bootstrapping operation is performed on a first homomorphic encrypted message 50. Here, the preset bootstrapping operation may be a generally known conventional bootstrapping operation as described above, or may be a method partially modified from the existing bootstrapping operation described later in the present disclosure. When such a bootstrapping operation is performed, a first intermediate encrypted message (or bootstrapped homomorphic encrypted message) 60 may be generated. For example, when the first homomorphic encrypted message is CT₁ = m₁+ e₁ (m₁ is message and e₁ is an error), the first intermediate encrypted message may be CT₁'= m₁+e₂= m₁ + 2ⁿe₁'+ e₁ (where 2ⁿe₁' is a boot strap error).

In addition, in order to check 'errors that are greater than or equal to the error range allowed by the approximation algorithm' among errors included after the bootstrapping, that is, to check error values other than messages, the subtraction homomorphic calculation is performed on two homomorphic encrypted messages before and after the preset bootstrapping (or rebooting). Accordingly, a second intermediate encrypted message 70 may be generated. For example, the second intermediate encrypted message may be CT₂ = CT₁' - CT₁ = e₂- e₁ = 2ⁿe₁' -e₁.

In addition, the preset bootstrapping operation is performed on the second intermediate encrypted message. Such a preset bootstrapping operation may be a generally known conventional bootstrapping operation, or may be the existing bootstrapping operation described later in the present disclosure, partially modified. Here, the bootstrapping process may be the same as the bootstrapping method applied to the first homomorphic encrypted message CT₁, or may be a different method. Accordingly, a third intermediate encrypted message 80 may be generated. For example, the third intermediate encrypted message may be CT₃ = Bootstrapping (CT₂) = e_{3 =} 2ⁿe₁' + e₄.

Since the third intermediate encrypted message is an error that has passed through the approximation algorithm, it may be regarded as 'an error greater than or equal to the error range allowed by the approximation algorithm' described above. Therefore, when the third intermediate encrypted message is finally subtracted from the first intermediate encrypted message, it is possible to generate the homomorphic encrypted messages having only an error within the error range allowed by the approximation algorithm. That is, CT₁" = CT₁' -CT₃= (m₁ + 2ⁿe₁ )-(2ⁿe₁ +e₄) = m₁ - e₄.

In this way, the homomorphic encrypted message bootstrapped through the meta bootstrapping process has only an error within the error range allowed by the approximation algorithm.

In addition, the meta bootstrapping process according to the present disclosure has advantages in the following points as well as the above-described precision.

Specifically, when n=N/2, which is the order of the ring, is given in ring( $R = \frac{{Z}_{q} \left[X\right]}{{Φ}_{N} \left(x\right)}$),there is a limit to the total amount of usable modulus for reasons of
encrypted message security.

In order to increase this total amount, the order of the ring should be increased. If the precision of each process of bootstrapping is increased, the amount of modulus consumed in each process inevitably increases. Since the amount of modulus (or the number of possible multiplications) that may be used after the bootstrapping is an amount obtained by subtracting the amount of modulus consumed in bootstrapping from the total modulus, as the modulus consumed in bootstrapping increases, the amount of modulus available after the bootstrapping is reduced and the efficiency of bootstrapping is reduced. In the case of increasing n to increase the modulus limit, another inefficiency occurs since any calculation becomes slower proportional to n.

In this regard, when the meta bootstrapping according to the present disclosure is used, the low-precision bootstrapping is repeated several times, so the amount of modulus consumed in the bootstrapping is still kept low. Therefore, there are two advantages:

First, at low n, it is possible to achieve precision not achievable with the conventional method.

Second, when the precision is fixed, it means that the order may be lowered, so the high-precision bootstrapping may be designed efficiently.

FIG. 5 is a flowchart for describing a method of processing a homomorphic encrypted message according to the present disclosure.

Referring to FIG. 5, first, a calculation of a homomorphic encrypted message for an approximate message including an error is performed (S510). For example, the calculation may be set to basic calculations such as multiplication, division, addition, subtraction, etc., but is not necessarily limited thereto. Specifically, when an encrypted message is in the form of a complex number, conjugate calculation may be performed, and other calculations such as statistics or sorting may also be performed.

It is determined whether the proportion of the approximate message in the calculation result encrypted message obtained by the calculation exceeds a threshold value (S520). In FIG. 5, it is illustrated that it is determined whether the proportion of the approximate message exceeds the threshold value after the calculation, but it is not necessarily limited thereto. In other words, it is possible to perform the determination before the calculation.

When the proportion of the approximate message exceeds the threshold, the plain text space of the calculation result encrypted message is extended. That is, the meta bootstrapping according to the present disclosure may be performed. A detailed operation of the meta bootstrapping of the present disclosure will be described below with reference to FIG. 6.

FIG. 6 is a flowchart for describing the bootstrapping operation of the present disclosure.

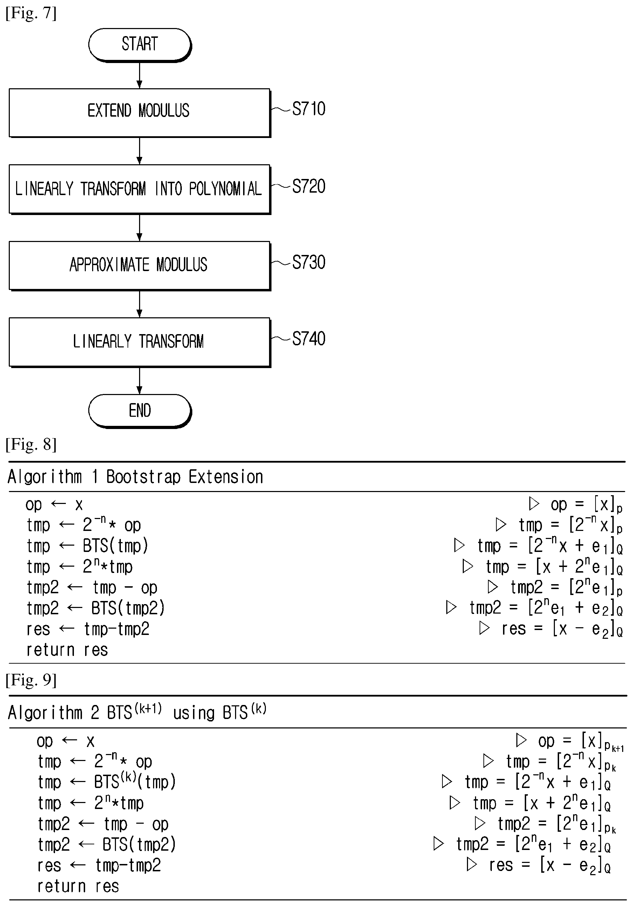

First, a first intermediate encrypted message is generated by applying the preset bootstrapping calculation to the calculation result encrypted message (S610). Specifically, the first intermediate encrypted message may be generated by reflecting a scaling factor to have a preset range of the calculation result encrypted message, applying the preset bootstrapping calculation to the calculation result encrypted message in which the scaling factor is reflected, and reflecting the scaling factor in a result to which the preset bootstrapping calculation is applied to generate the first intermediate encrypted message. Here, the preset range is [-1, 1] or [-2^{(k-1)n}, 2^{(k-1)n}] (where k is the number of repetitions of the step of extending the plain text space, and integers equal to or greater than 1). A detailed operation of the preset bootstrapping calculation will be described later with reference to FIG. 7.

The second intermediate encrypted message is generated by applying the preset bootstrap calculation to a subtraction calculation result between the calculation result encrypted message and the first intermediate encrypted message (S620). Specifically, the subtraction result between the calculation result encrypted message and the first intermediate encrypted message represents the difference in error change before and after the bootstrapping, and the bootstrapping result for the corresponding encrypted message represents an error value greater than or equal to the error range of the approximation algorithm among the corresponding errors.

The subtraction calculation of the second intermediate encrypted message is performed on the first intermediate encrypted message to generate the homomorphic encrypted message with the extended plain text space (S630). Specifically, when the subtraction homomorphic calculation of subtracting the corresponding second intermediate encrypted message from the first intermediate encrypted message is performed, if the error size equal to or greater than the error range of the approximation algorithm is removed from the errors in the first intermediate encrypted message, that is, the final encrypted message has an error value within the error range of the message and the approximation algorithm.

Meanwhile, in the above, it has been illustrated and described that the bootstrapping operation is performed with a one-time operation. However, in implementation, the above-described operation may be performed plural times according to the implementation method.

FIG. 7 is a flowchart for describing an operation of extending a plain text space of the present disclosure.

First, the modulus of the homomorphic encrypted message is extended. Specifically, the modulus may be extended for the plain text extension (S710).

The homomorphic encrypted message having the extended modulus is linearly transformed into a polynomial form (S720). Specifically, the approximate modulus calculation is performed using a polynomial. Therefore, it is possible to perform the linear transformation of the encrypted message into the polynomial form. This linear transformation may be referred to as SlotToCoeff. Specifically, since the polynomial of the homomorphic encrypted message is composed of complex numbers, the linear transformation may be performed using a predefined matrix in order to transform each coefficient of the polynomial into a form included in a slot. Here, the predefined matrix may be a discrete Fourier Transform (DFT) matrix. Meanwhile, in the present invention, the preset bootstrapping operation is performed twice in the meta bootstrapping process, and the linear transformation may be performed in different ways in the first bootstrapping operation and the second bootstrapping process. For example, since the first bootstrapping operation is performed on the original message, the linear transformation is performed by a method having high precision, and since the second bootstrapping operation is performed on the errors in the encrypted message, it is also possible to perform the linear transformation by the method having lower precision than the linear transformation performed previously.

The approximate modulus calculation is performed on the homomorphic encrypted message transformed into the polynomial form using a polynomial equation set so that input values within the preset range approximate an integer point (S730). Specifically, the approximate modulus calculation may be performed on the linearly transformed homomorphic encrypted message using the polynomial set so that the input values within the preset range approximate an integer point.

The result of calculating the approximate modulus is linearly transformed into the homomorphic encrypted message (S740). Specifically, the approximate modulus calculated homomorphic encrypted message may be transformed into the polynomial form using an inverse matrix corresponding to the matrix used for the linear transformation of the homomorphic encrypted message, and the transformed polynomial may be transformed into the encrypted message form.

Meanwhile, in FIG. 7, it is illustrated and described as performing the linear transformation operation to the polynomial after the modulus expansion, but in implementation, the linear transformation operation may be first performed, and then the modulus extension operation may be performed. In this case, it is possible to reduce the number of calculations in the bootstrapping process by reflecting and calculating the value for the modulus extension during the processing of the DFT matrix used in the linear transformation operation.

In addition, although the transformation operation is illustrated and described in FIG. 7 as a polynomial form, there may be cases in which the encrypted message is formed in the polynomial form in implementation. In this case, the above-described operation of linear transformation into the polynomial may be omitted. That is, the linear conversion operation (720) of FIG. 7 may be implemented in an omitted form.

FIG. 8 is a diagram illustrating an algorithm of a bootstrapping operation according to a first embodiment of the present disclosure. It is assumed that the bootstrapping operation algorithm according to the first embodiment has an input range of [-1, 1] and n-bit precision. In the table shown, x means a homomorphic encrypted message, and p means a modulus larger than q.

Referring to FIG. 8, first, the input range is transformed by reflecting precision in the homomorphic encrypted message (2⁻ⁿ*op). Then, the preset bootstrapping algorithm is applied to the homomorphic encrypted message having the changed input range (BTS(tmp)), and the input range previously reflected in the result is extended (2n*tmp).

The process up to this point is the same as the general bootstrapping process, so the description of the specific algorithm of each process is omitted.

The difference between the homomorphic encrypted message before the bootstrapping and the encrypted message as the result of the first bootstrapping is calculated (tmp-op), and the second bootstrapping is performed on the calculated result (BTS(temp2)).

Finally, the final homomorphic encrypted message may be generated by reflecting the second bootstrapping result (specifically, the bootstrapping result for the error difference between the bootstrapping result and the error before bootstrapping) to the first bootstrapping result.

FIG. 9 is a diagram illustrating an algorithm of a bootstrapping operation according to a second embodiment of the present disclosure. The bootstrapping operation algorithm according to the second embodiment has [-2^{(k-1)n}, 2^{(k-1)n}], where it is assumed that k is an integer greater than 1 as the number of repetitions of the bootstrapping operation algorithm, and n is precision.

Referring to FIG. 9, first, the input range is transformed by reflecting precision in the homomorphic encrypted message (2⁻ⁿ*op). The preset bootstrapping algorithm is applied to the homomorphic encrypted message having the changed input range (BTS ^{(k)}(tmp)), and the input range previously reflected in the result is extended (2ⁿ*tmp).

The difference between the homomorphic encrypted message before the bootstrapping and the encrypted message as the result of the first bootstrapping is calculated (temp-op), and the second bootstrapping is performed on the calculated result (BTS(temp2)).

Finally, the final homomorphic encrypted message may be generated by reflecting the second bootstrapping result (specifically, the bootstrapping result for the error difference between the bootstrapping result and the error before bootstrapping) to the first bootstrapping result.

Hereinafter, the case in which the meta bootstrapping according to the present disclosure is applied to a homomorphic encrypted message of a fixed point method will be described. First, it is assumed that x = {slot[0], slot[1]), and the level of x is 4.

Step 1: <<x, lv.4>> / 2²⁰ = <<x/2²⁰, lv.3>>

Step 2: Bootstrap(<<x/2²⁰, lv.3>>) = <<x/2²⁰ + e, lv.max>>

Step 3: 2²⁰ * <<x/2²⁰ + e, lv.max>> - <<x, lv.4>> = <<2²⁰ * e, lv.4>>

Step 4: Bootstrap(<<2²⁰ * e, lv.4>>) = <<2²⁰ * e + e', lv.max>>

Step 5: <<x + 2²⁰ * e, lv.max>> - <<2²⁰ * e + e', lv.max>> = <<x - e', lv.max>>

As such, the homomorphic encrypted message, which is the final result, includes e' as an error. e' is a bootstrapping error, and therefore, is less than or equal to 2^(-30). That is, it can be seen that both slot[0] and slot[1] have a precision of 30 digits or more. If this is expressed graphically, it is as illustrated in FIG. 11.

Referring to FIG. 11, it can be seen that 30-bit precision is achieved even when the fixed point method is used. In fact, it can be seen that slot[0] achieves 50-bit precision, not 30-bit precision.

In this way, using the meta bootstrapping method according to the present disclosure, it is possible to extend the plain text space without loss of precision even for the homomorphic encrypted message of the fixed point method.

Meanwhile, the above-described encrypted message processing method according to various embodiments may be implemented in the form of program code for performing each step, and stored and distributed in a recording medium. In this case, the device equipped with the recording medium may perform operations such as the above-described encryption or encrypted message processing.

Such a recording medium may be various types of computer readable media such as ROM, RAM, memory chip, memory card, external hard, hard, CD, DVD, magnetic disk, or magnetic tape.

Although the present disclosure has been described with reference to the accompanying drawings, the scope of the present disclosure is determined by the claims to be described below and should not be construed as being limited to the foregoing embodiments and/or drawings. In addition, it should be clearly understood that improvements, changes and modifications obvious to those skilled in the art of the disclosure described in the claims are also included in the scope of the present disclosure. The scope of the invention is defined by the claims as appended.

## Claims

1. A method of processing a homomorphic encrypted message, comprising:
performing calculation on a homomorphic encrypted message on an approximate message including an error; and
when a proportion of the approximate message in a calculation result encrypted message acquired by the calculation exceeds a threshold value, extending a plain text space of the calculation result encrypted message,
wherein the method is **characterised in that** the extending of the plain text space includes:
generating a first intermediate encrypted message by applying a preset bootstrapping calculation to the calculation result encrypted message;
generating a second intermediate encrypted message by applying the preset bootstrapping calculation to a subtraction calculation result between the calculation result encrypted message and the first intermediate encrypted message; and
generating a homomorphic encrypted message having an extended plain text space by performing a subtraction calculation of the second intermediate encrypted message on the first intermediate encrypted message.

2. The method as claimed in claim 1, wherein, in the generating of the first intermediate encrypted message, a scaling factor is reflected to have a preset range of the calculation result encrypted message, the preset bootstrapping calculation is applied to the calculation result encrypted message in which the scaling factor is reflected, and the scaling factor is reflected in a result to which the preset bootstrapping calculation is applied to generate the first intermediate encrypted message.

3. The method as claimed in claim 2, wherein the preset range is [-1, 1].

4. The method as claimed in claim 2, wherein the preset range is [-2^{(k-1)n}, 2 ^{(k-1)n}], where k is the number of repetitions of the extending of the plain text space, and n is precision.

5. The method as claimed in claim 1, wherein the preset bootstrapping calculation includes:
extending a modulus of the homomorphic encrypted message;
linearly transforming the homomorphic encrypted message having the extended modulus into a polynomial form;
performing an approximate modulus calculation on the homomorphic encrypted message transformed into the polynomial form using a polynomial equation set so that input values within the preset range approximate an integer point; and
linearly transforming a result of calculating the approximate modulus into a form of the homomorphic encrypted message.

6. The method as claimed in claim 1, wherein the preset bootstrapping calculation includes:
linearly transforming the homomorphic encrypted message into a polynomial form;
extending the modulus of the homomorphic encrypted message linearly transformed into the polynomial form;
performing an approximate modulus calculation on a result of extending the modulus; and
linearly transforming the result of calculating the approximate modulus into a form of the homomorphic encrypted message.

7. An arithmetic unit, comprising:
a memory configured to store a homomorphic encrypted message for an approximate message including an error; and
a processor configured to perform calculation on the homomorphic encrypted message,
wherein the arithmetic unit is **characterised in that**:
the processor generates a first intermediate encrypted message by applying a preset bootstrapping calculation to the calculation result encrypted message, generates a second intermediate encrypted message by applying the preset bootstrapping calculation to a subtraction calculation result between the calculation result encrypted message and the first intermediate encrypted message, and generates a homomorphic encrypted message having an extended plain text space by performing a subtraction calculation of the second intermediate encrypted message on the first intermediate encrypted message.

8. The arithmetic unit as claimed in claim 7, wherein the processor reflects a scaling factor to have a preset range of the calculation result encrypted message, applies the preset bootstrapping calculation to the calculation result encrypted message in which the scaling factor is reflected, and reflects the scaling factor in a result to which the preset bootstrapping calculation is applied to generate the first intermediate encrypted message.

9. The arithmetic unit as claimed in claim 8, wherein the present range is [-1, 1].

10. The arithmetic unit as claimed in claim 8, wherein the preset range is [-2^{(k-1)n}, 2^{(k-1)n}], where k is the number of repetitions of the extending of the plain text space, and n is precision.

11. The arithmetic unit as claimed in claim 7, wherein the processor extends a modulus of the homomorphic encrypted message, linearly transforms the homomorphic encrypted message having the extended modulus into a polynomial form, performs an approximate modulus calculation on the homomorphic encrypted message transformed into the polynomial form using a polynomial equation set so that input values within the preset range approximate an integer point, and linearly transforms a result of calculating the approximate modulus into a form of the homomorphic encrypted message to perform the preset bootstrapping calculation.

12. The arithmetic unit as claimed in claim 7, wherein the processor linearly transforms the homomorphic encrypted message into a polynomial form, extends the modulus of the homomorphic encrypted message linearly transformed into the polynomial form, performs an approximate modulus calculation on a result of extending the modulus, and linearly transforms the result of calculating the approximate modulus into a form of the homomorphic encrypted message to perform the preset bootstrapping calculation to perform the preset bootstrapping calculation.

## Patentansprüche

1. Verfahren zur Verarbeitung einer homomorph verschlüsselten Nachricht, umfassend:
Durchführen einer Berechnung an einer homomorph verschlüsselten Nachricht auf einer Näherungsnachricht, die einen Fehler einschließt; und
wenn ein Anteil der Näherungsnachricht in einer durch die Berechnung erlangten verschlüsselten Berechnungsergebnisnachricht einen Schwellenwert überschreitet, Erweitern eines Klartextraums der verschlüsselten Berechnungsergebnisnachricht, wobei das Verfahren **dadurch gekennzeichnet ist, dass** das
Erweitern des Klartextraums Folgendes einschließt:
Erzeugen einer ersten verschlüsselten Zwischennachricht durch Anwenden einer vorgegebenen Bootstrapping-Berechnung auf die verschlüsselte Berechnungsergebnisnachricht; Erzeugen einer zweiten verschlüsselten Zwischennachricht durch Anwenden der vorgegebenen Bootstrapping-Berechnung auf ein Ergebnis einer Subtraktionsberechnung zwischen der verschlüsselten Berechnungsergebnisnachricht und der ersten verschlüsselten Zwischennachricht;
und Erzeugen einer homomorph verschlüsselten Nachricht mit erweitertem Klartextraum durch Durchführen einer Subtraktionsberechnung der zweiten verschlüsselten Zwischennachricht von der ersten verschlüsselten Zwischennachricht.

2. Verfahren nach Anspruch 1, wobei beim Erzeugen der
ersten verschlüsselten Zwischennachricht ein Skalierungsfaktor berücksichtigt wird, um einen vorgegebenen Bereich der verschlüsselten Berechnungsergebnisnachricht zu erhalten, die vorgegebene Bootstrapping-Berechnung auf die verschlüsselte Berechnungsergebnisnachricht angewendet wird, in der der Skalierungsfaktor berücksichtigt ist, und der Skalierungsfaktor in einem Ergebnis berücksichtigt wird, auf das die vorgegebene Bootstrapping-Berechnung angewendet wird, um die erste verschlüsselte Zwischennachricht zu erzeugen.

3. Verfahren nach Anspruch 2, wobei der vorgegebene Bereich [-1, 1] ist.

4. Verfahren nach Anspruch 2, wobei der vorgegebene Bereich [-2^{(k-1)n}, 2^{(k-1)n}] ist, wobei k die Anzahl der Wiederholungen der Erweiterung des Klartextraums und n die Präzision ist.

5. Verfahren nach Anspruch 1, wobei die vorgegebene Bootstrapping-Berechnung Folgendes einschließt: Erweitern eines Modulus der homomorph verschlüsselten Nachricht; lineares Transformieren der homomorph verschlüsselten Nachricht mit dem erweiterten Modulus in eine Polynomform;
Durchführen einer Modulus-Näherungsberechnung an der in die Polynomform transformierten homomorph verschlüsselten Nachricht unter Verwendung eines Polynomgleichungssatzes, sodass Eingangswerte innerhalb des vorgegebenen Bereichs sich einem ganzzahligen Punkt annähern; und
lineares Transformieren eines Ergebnisses der Modulus-Näherungsberechnung in eine Form der homomorph verschlüsselten Nachricht.

6. Verfahren nach Anspruch 1, wobei die vorgegebene Bootstrapping-Berechnung Folgendes einschließt: lineares Transformieren der homomorph verschlüsselten Nachricht in eine Polynomform;
Erweitern des Modulus der in die Polynomform linear transformierten homomorph verschlüsselten Nachricht;
Durchführen einer Modulus-Näherungsberechnung an dem Ergebnis der Moduluserweiterung; und
lineares Transformieren des Ergebnisses der Modulus-Näherungsberechnung in eine Form der homomorph verschlüsselten Nachricht.

7. Recheneinheit, umfassend:
einen Speicher, der dazu konfiguriert ist, eine homomorph verschlüsselte Nachricht für eine Näherungsnachricht zu speichern, die einen Fehler einschließt; und
einen Prozessor, der dazu konfiguriert ist, eine Berechnung an der homomorph verschlüsselten Nachricht durchzuführen, wobei die Recheneinheit **dadurch gekennzeichnet ist, dass**:
der Prozessor eine erste verschlüsselte Zwischennachricht
durch Anwenden einer vorgegebenen Bootstrapping-Berechnung auf die verschlüsselte Berechnungsergebnisnachricht erzeugt, eine zweite verschlüsselte Zwischennachricht durch Anwenden der vorgegebenen Bootstrapping-Berechnung auf das Ergebnis einer Subtraktionsberechnung zwischen der verschlüsselten Berechnungsergebnisnachricht und der ersten verschlüsselten Zwischennachricht erzeugt und eine homomorph verschlüsselte Nachricht mit einem erweiterten Klartextraum durch Ausführen einer Subtraktionsberechnung der zweiten verschlüsselten Zwischennachricht von der ersten verschlüsselten Zwischennachricht erzeugt.

8. Recheneinheit nach Anspruch 7, wobei der Prozessor einen Skalierungsfaktor berücksichtigt, um einen vorgegebenen Bereich der verschlüsselten Berechnungsergebnisnachricht zu erhalten, die vorgegebene Bootstrapping-Berechnung auf die verschlüsselte Berechnungsergebnisnachricht anwendet, in der der Skalierungsfaktor berücksichtigt ist, und den Skalierungsfaktor in einem Ergebnis berücksichtigt, auf das die vorgegebene Bootstrapping-Berechnung angewendet wird, um die erste verschlüsselte Zwischennachricht zu erzeugen.

9. Recheneinheit nach Anspruch 8, wobei der vorgegebene Bereich [-1, 1] ist.

10. Recheneinheit nach Anspruch 8, wobei der vorgegebene Bereich [-2^{(k-1)n}, 2^{(k-1)n}] ist, wobei k die Anzahl der Wiederholungen der Erweiterung des Klartextraums und n die Präzision ist.

11. Recheneinheit nach Anspruch 7, wobei der Prozessor einen Modulus der homomorph verschlüsselten Nachricht erweitert, die homomorph verschlüsselte Nachricht mit dem erweiterten Modulus linear in eine Polynomform transformiert, eine Modulus-Näherungsberechnung an der in die Polynomform transformierten homomorph verschlüsselten Nachricht unter Verwendung eines Polynomgleichungssatzes durchführt, sodass Eingangswerte innerhalb des vorgegebenen Bereichs sich einem ganzzahligen Punkt annähern, und ein Ergebnis der Modulus-Näherungsberechnung linear in eine Form der homomorph verschlüsselten Nachricht transformiert, um die vorgegebene Bootstrapping-Berechnung durchzuführen.

12. Recheneinheit nach Anspruch 7, wobei der Prozessor die homomorph verschlüsselte Nachricht linear in eine Polynomform transformiert, den Modulus der linear in die Polynomform transformierten homomorph verschlüsselten Nachricht erweitert, eine Modulus-Näherungsberechnung an einem Ergebnis der Moduluserweiterung durchführt und das Ergebnis der Modulus-Näherungsberechnung linear in eine Form der homomorph verschlüsselten Nachricht transformiert, um die vorgegebene Bootstrapping-Berechnung durchzuführen.

## Revendications

1. Procédé de traitement d'un message chiffré homomorphe, comprenant :
la réalisation d'un calcul sur un message chiffré homomorphe sur un message approximatif comportant une erreur ; et
lorsqu'une proportion du message approximatif dans un message chiffré de résultat de calcul acquis par le calcul dépasse une valeur seuil, l'extension d'un espace de texte en clair du message chiffré de résultat de calcul,
dans lequel le procédé est **caractérisé en ce que**
l'extension de l'espace de texte en clair comprend :
la génération d'un premier message chiffré intermédiaire en appliquant un calcul d'amorçage prédéfini au message chiffré de résultat de calcul ; la génération d'un second message chiffré intermédiaire en appliquant le calcul d'amorçage prédéfini à un résultat de calcul de soustraction entre le message chiffré de résultat de calcul et le premier message chiffré intermédiaire ; et la génération d'un message chiffré homomorphe présentant un espace de texte en clair étendu en effectuant un calcul de soustraction du second message chiffré intermédiaire sur le premier message chiffré intermédiaire.

2. Procédé selon la revendication 1, dans lequel, lors de la génération du
premier message chiffré intermédiaire, un facteur d'échelle est pris en compte afin d'obtenir une plage prédéfinie du message chiffré de résultat de calcul, le calcul d'amorçage prédéfini est appliqué au message chiffré de résultat de calcul dans lequel le facteur d'échelle est pris en compte, et le facteur d'échelle est pris en compte dans un résultat auquel le calcul d'amorçage prédéfini est appliqué afin de générer le premier message chiffré intermédiaire.

3. Procédé selon la revendication 2, dans lequel la plage prédéfinie est [-1, 1].

4. Procédé selon la revendication 2, dans lequel la plage prédéfinie est [-2^{(k-1)n}, 2^{(k-1)n}], où k est le nombre de répétitions de l'extension de l'espace de texte en clair, et n est la précision.

5. Procédé selon la revendication 1, dans lequel le calcul d'amorçage prédéfini comprend : l'extension d'un module du message chiffré homomorphe ; la transformation linéaire du message chiffré homomorphe présentant le module étendu en une forme polynomiale ; la réalisation d'un calcul de module approximatif sur le message chiffré homomorphe transformé en forme polynomiale à l'aide d'un ensemble d'équations polynomiales, de sorte que des valeurs d'entrée comprises dans la plage prédéfinie s'approchent d'un point entier ; et
la transformation linéaire d'un résultat du calcul de module approximatif en une forme du message chiffré homomorphe.

6. Procédé selon la revendication 1, dans lequel le calcul d'amorçage prédéfini comprend : la transformation linéaire du message chiffré homomorphe en une forme polynomiale ;
l'extension du module du message chiffré homomorphe transformé linéairement en forme polynomiale ;
la réalisation d'un calcul de module approximatif sur un résultat d'extension du module ; et
la transformation linéaire du résultat du calcul de module approximatif en une forme du message chiffré homomorphe.

7. Unité arithmétique, comprenant :
une mémoire configurée pour stocker un message chiffré homomorphe pour un message approximatif comportant une erreur ; et
un processeur configuré pour effectuer un calcul sur le message chiffré homomorphe, l'unité arithmétique étant **caractérisée en ce que** :
le processeur génère un premier message chiffré intermédiaire en appliquant un calcul d'amorçage prédéfini au message chiffré de résultat de calcul, génère un second message chiffré intermédiaire en appliquant le calcul d'amorçage prédéfini à un résultat de calcul de soustraction entre le message chiffré de résultat de calcul et le premier message chiffré intermédiaire, et génère un message chiffré homomorphe présentant un espace de texte en clair étendu en effectuant un calcul de soustraction du second message chiffré intermédiaire sur le premier message chiffré intermédiaire.

8. Unité arithmétique selon la revendication 7, dans laquelle le processeur prend en compte un facteur d'échelle afin d'obtenir une plage prédéfinie du message chiffré de résultat de calcul, applique le calcul d'amorçage prédéfini au message chiffré de résultat de calcul dans lequel le facteur d'échelle est pris en compte, et prend en compte le facteur d'échelle dans un résultat auquel le calcul d'amorçage prédéfini est appliqué pour générer le premier message chiffré intermédiaire.

9. Unité arithmétique selon la revendication 8, dans laquelle la plage prédéfinie est [-1, 1].

10. Unité arithmétique selon la revendication 8, dans laquelle la plage prédéfinie est [-2^{(k-1)n}, 2^{(k-1)n}], où k est le nombre de répétitions de l'extension de l'espace de texte en clair, et n est la précision.

11. Unité arithmétique selon la revendication 7, dans laquelle le processeur étend un module du message chiffré homomorphe, transforme linéairement le message chiffré homomorphe présentant le module étendu en une forme polynomiale, effectue un calcul de module approximatif sur le message chiffré homomorphe transformé en forme polynomiale à l'aide d'un ensemble d'équations polynomiales, de telle sorte que des valeurs d'entrée comprises dans la plage prédéfinie s'approchent d'un point entier, et transforme linéairement un résultat du calcul de module approximatif en une forme du message chiffré homomorphe afin d'effectuer le calcul d'amorçage prédéfini.

12. Unité arithmétique selon la revendication 7, dans laquelle le processeur transforme linéairement le message chiffré homomorphe en une forme polynomiale, étend le module du message chiffré homomorphe transformé linéairement en forme polynomiale, effectue un calcul du module approximatif sur un résultat de l'extension du module, et transforme linéairement le résultat du calcul du module approximatif en une forme du message chiffré homomorphe afin d'effectuer le calcul d'amorçage prédéfini.
